# EUROPÄISCHE PATENTSCHRIFT

(11) **EP 0 719 047 B1**
(45) Veröffentlichungstag und Bekanntmachung des Hinweises auf die Patenterteilung: **01.03.2000**
(21) Anmeldenummer: 95119833.2
(22) Anmeldetag: 15.12.1995
(51) Int. Cl.: H04N 7/173

(54) **Verfahren zur Steuerung eines Verbindungsaufbaus für interaktive Dienste**
Method for controlling the establishment of connections in interactive services
Méthode pour commander l'établissement des liaisons dans des services interactifs

(30) Priorität: 22.12.1994 DE 4446093
(43) Veröffentlichungstag der Anmeldung: 26.06.1996
(73) Patentinhaber: SIEMENS AKTIENGESELLSCHAFT, 80333 München (DE)
(72) Erfinder: Hussmann, Heinrich, Dr.Ing., D-82327 Tutzing (DE); Theimer, Thomas, Dr.Ing., D-81379 München (DE)

(56) Entgegenhaltungen:
- IEEE COMMUNICATIONS MAGAZINE, Bd. 32, Nr. 5, Mai 1994 NEW YORK, NY, US, Seiten 68-80, XP 000451097 CHANG ET AL 'An Open- System Approach to Video on Demand'
- IEEE COMMUNICATIONS MAGAZINE, Bd. 32, Nr. 5, Mai 1994 NEW YORK, NY, US, Seiten 82-88, XP 000451098 DELODDERE ET AL 'Interactive Video on Demand'
- RADIO FERNSEHEN ELEKTRONIK, Bd. 43, Nr. 8, 1.August 1994 Seiten 14-17, XP 000478307 'VIDEO ON DEMAND'

## Beschreibung

Die Erfindung betrifft ein Verfahren gemäß dem Oberbegriff des Patentanspruchs 1.

Heute werden Dienste, die mehrere Medien wie zum Beispiel Audio, Video und Daten integrieren und dem Teilnehmer Interaktionen erlauben unter dem Sammelbegriff interaktive Multimediadienste zusammengefaßt. Darunter werden spezielle Dienste, wie beispielsweise Homeshopping, Video on demand oder Distant Learning verstanden, die von einer, beim Teilnehmer installierten Endeinrichtung in Anspruch genommen werden. Es ist naheliegend, als solche Endeinrichtungen Fernsehgeräte zu benutzen, da diese zum einen bereits in großer Zahl beim Teilnehmer vorhanden sind und zum anderen dem Teilnehmer die Möglichkeit bieten, auf optischem oder akustischem Wege einen Dialog mit dem jeweiligen Dienstanbieter zu führen.

Zur Behandlung dieser Abläufe werden spezielle Steuervorrichtungen eingesetzt. Diese Steuervorrichtungen werden als Set-Top-Boxen bezeichnet und als Zusatzeinrichtungen einem Fernsehgerät zugeschaltet. In der Regel werden sie in die, dem Fernsehgerät zugeführte Verbindungsleitung eingefügt. Einfache Set-Top-Boxen können dabei zusätzliche Fernsehkanäle wie zum Beispiel Pay TV decodieren und die entsprechenden Informationen am Bildschirm des jeweiligen Fernsehgerätes darstellen. Leistungsfähigere Set-Top-Boxen können interaktiv vom Teilnehmer mit Hilfe einer Fernbedienung zur Nutzung der oben angesprochenen speziellen Dienste angesteuert werden. Der technologische Trend zu immer leistungsfähigeren und kostengünstigeren Speichern hat dazu geführt, daß insbesondere der Abruf von Videofilmen (Video on demand) technisch realisierbar geworden ist und auch zunehmend von den verantwortlichen Diensteanbietern bereitgestellt wird. Die Videofilme sind dabei in komprimierter Form in großen digitalen Speichervorrichtungen, die als Video-Server bezeichnet werden, abgespeichert.

Dienste der oben erwähnten Art werden z.B. in dem Artikel IEEE Communications Magazine, Bd. 32, Nr. 5, Mai 1994, New-York, US, Seiten 82-88, XP 000 451 098, Deloddere et al., "Interactive Video on Demand" beschrieben.

Eine Set-Top-Box stellt über ein breitbandiges Datenübertragungsnetz eine Verbindung zu den in Frage kommenden Video-Servern her und steuert die Auswahl und Wiedergabe von Video-Filmen in Abhängigkeit von den Eingaben des Teilnehmers. Beim Stand der Technik werden für den Aufbau dieser Verbindungen entweder innerhalb des Netzes oder bei der Set-Top-Box spezielle Einrichtungen verwendet, die von der allgemeinen Vermittlungstechnik für Breitbandnetze abweichen. Ein Beispiel hierfür sind spezielle Vermittlungsrechner, die für interaktive Video-Dienste konzipiert wurden. Problematisch daran ist, daß dieselben in komplexer Art und Weise in die Vermittlungstechnik des Breitbandnetzes eingreifen. Zur Behebung dieses Problems wurde in der deutschen Patentanmeldung DE-A-44 30 051 (die der EP-A-0 698 998 entspricht) ein Verfahren vorgeschlagen, das ein adaptiertes Signalisierungsverfahren zum automatischen Verbindungsaufbau in Breitbandnetzen benutzt. Dieses Verfahren setzt jedoch auf Seite der Set-Top-Box in Bezug auf den Verbindungsaufbau ein spezielles Verhalten voraus, das von dem eines normalen Breitbandendgerätes abweicht. Insbesondere muß hier die Rufnummer des Diensteanbieters an die Set-Top-Box weitergegeben werden, was in der Praxis das Signalisierungsverfahren zur Erstellung des Verbindungsaufbaus aufwendiger macht.

Der Erfindung liegt die Aufgabe zugrunde, ein Verfahren zum Verbindungsaufbau für interaktive Video-Dienste anzugeben, mittels dem der Verbindungsaufbau schnell und effizient durchgeführt werden kann.

Die Erfindung wird ausgehend vom Oberbegriff des Patentanspruchs 1 durch die im kennzeichnenden Teil angegebenen Merkmale gelöst.

Der Vorteil der vorliegenden Erfindung ist darin zu sehen, daß eine nahtlose Integration von interaktiven Videodiensten in Breitbandnetze ermöglicht wird.Dabei werden Basisbausteine der fortgeschrittenen Vermittlungstechnik wie beispielsweise "MULTIPLE CONNECTION CALL" und "CALL TRANSFER" verwendet. Damit ist der Vorteil verbunden, daß die verwendeten Set-Top-Boxen den Verbindungsaufbau in gleicher Weise steuern, wie andere Breitbandendgeräte des Netzes. Der Verbindungsaufbau hängt somit nicht mehr von speziellen Eigenschaften der Set-Top-Box ab. Damit wird zum einen eine größere Betriebssicherheit erreicht und zum anderen der Verbindungsaufbau beschleunigt, da nur ein einfaches Protokoll zwischen Netz und Set-Top-Box realisiert wird.

Weitere Ausgestaltungen der Erfindung sind in den Unteransprüchen angegeben.

Gemäß Anspruch 2 ist vorgesehen, daß im Zuge des ersten Verbindungsaufbaus zwischen peripherer Steuervorrichtung (STB) und Dienste vorrrichtung (VIP) eine schmalbandige und gegebenenfalls Später eine breitbandige Verbindung erstellt wird. Damit ist der Vorteil verbunden, daß im Bedarfsfalle zur Auswahl eines Filmes signifikante Filmpassagen (Clips) vom Teilnehmer betrachtet werden können.

Eine Mehrzahl von zentralen Steuervorrichtungen kann vorgesehen sein, und der erste Verbindungsaufbau kann durch eine der zentralen Steuervorrichtungen gesteuert werden. Vorzugsweise wird die als Service Control Point SCP arbeitende Steuervorrichtung mit derartigen Aufgaben befaßt.

Gemäß Anspruch 3 ist vorgesehen, daß der schmalbandige und breitbandige Anteil des weiteren Verbindungsaufbaus in einem Schritt durchgeführt wird. Damit ist der Vorteil verbunden, daß Basisbausteine von Breitbandverbindungen (MULTIPLE CONNECTION CALL) verwendbar sind. Außerdem ist damit der Vorteil verbunden, daß der Verbindungsaufbau wesentlich schneller durchgeführt werden kann.

Gemäß Anspruch 4 ist vorgesehen, daß die Bandbreite der Verbindung an die benötigte Bitrate der Informationen angepaßt wird. Dabei erfolgt die Anpassung durch die Steuervorrichtung zur Auswahl des Diensteanbieters (VIP). Damit ist der Vorteil einer effizienten Nutzung der Netzressourcen verbunden.

Gemäß Anspruch 5 ist vorgesehen, daß die jeweilige zentrale Steuervorrichtung eine Tabelle enthält, in der die physikalischen Adressen aller im Netz vorhandenen Speichervorrichtungen abgelegt sind. Damit ist der Vorteil verbunden, daß diese Informationen an zentraler Stelle im Netz abgelegt sind und dort von allen Teilnehmern benutzt werden können.

Gemäß Anspruch 6 ist vorgesehen, daß das Steuersignal von der, den ersten Verbindungsaufbau initiierenden peripheren Steuervorrichtung abgegeben wird.

Gemäß Anspruch 7 ist vorgesehen, daß die jeweilige Speichervorrichtung ein Video-Server zum Abspeichern von Filmen ist.

Es is noch zu bemerken daß gemäß Anspruch 1 vorgesehen ist, daß die Verbindung zwischen der jeweiligen peripheren Steuervorrichtung und dem Netzknoten erhalten bleibt. Damit ist der Vorteil verbunden, daß die ursprünglich erstellte Verbindung zwischen der Steuervorrichtung und dem Netzknoten weiterbenutzt werden kann. Darüber hinaus kann in vorteilhafter Weise der Basisbaustein "CALL TRANSFER" verwendet werden, was in der Praxis eine schnelle Ausführung bedeutet.

Die Erfindung wird im folgenden anhand eines Ausführungsbeispiels näher erläutert.

Es zeigen
- Figur 1: eine Anordnung, mittels der das erfindungsgemäße Verfahren zum Ablauf gelangt,
- Figur 2: das erfindungsgemäße Verfahren anhand einer Signalisierungsprozedur, wie sie beim Verbindungsaufbau in intelligenten Netzen benutzt wird.

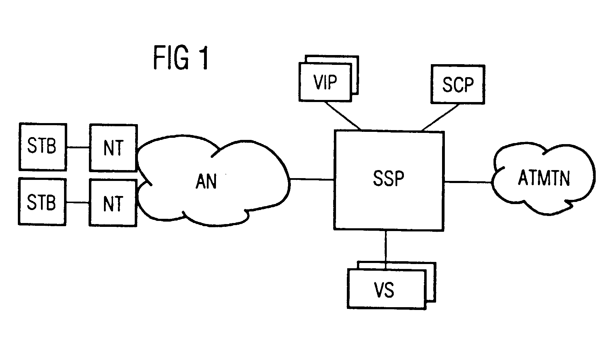

In Figur 1 ist eine Anordnung aufgezeigt, auf der das erfindungsgemäße Verfahren zum Ablauf gelangt. Darin ist als zentraler Bestandteil eines Netzwerkes ein der Durchschaltung von Informationen dienender Netzknoten SSP aufgezeigt. Es wird weiterhin davon ausgegangen, daß die Informationen nach dem Prinzip des asynchronen Transfermodus (ATM) zwischen den einzelnen Einrichtungen des Netzwerkes übertragen werden. An den Netzknoten SSP ist ein zentraler Rechner SCP angeschaltet.Dieser wird nach der Definition der intelligenten Netze als Service-Control-Point bezeichnet. Der Netzknoten SSP besitzt Durchschaltefunktion, unterstützt die Vergebührung und triggert die IN-Dienste, während der Rechner SCP für die IN-Dienste -Steuerung verantwortlich ist. Weiterhin ist am Netzknoten SSP eine Speichervorrichtung VS angeschaltet. Diese ist im vorliegenden Ausführungsbeispiel als Video-Server ausgebildet. Weiterhin kann an den Netzknoten SSP gegebenenfalls ein weiteres Netzwerk ATMTN herangeführt sein. Weiterhin ist am Netzknoten SSP eine zentrale Steuervorrichtung VIP angeschlossen. Dabei handelt es sich um die Steuereinheit zur Auswahl des Dienste-Anbieters. Die Dienste-Anbieter sind in internen Tabellen dieser Vorrichtung abgespeichert und können nach erfolgtem Verbindungsaufbau von einer der Set-Top-Boxen STB ausgewählt werden. Weiterhin sind am Netzknoten SSP über ein Access-Network AN sowie den entsprechenden Netzabschlußvorrichtungen NT die Set-Top-Boxen STB angeschlossen.

Im folgenden wird nun aufgezeigt, wie beispielsweise ein Verbindungsaufbau zum Abruf eines Filmes aus dem Video-Server VS durchgeführt werden soll.

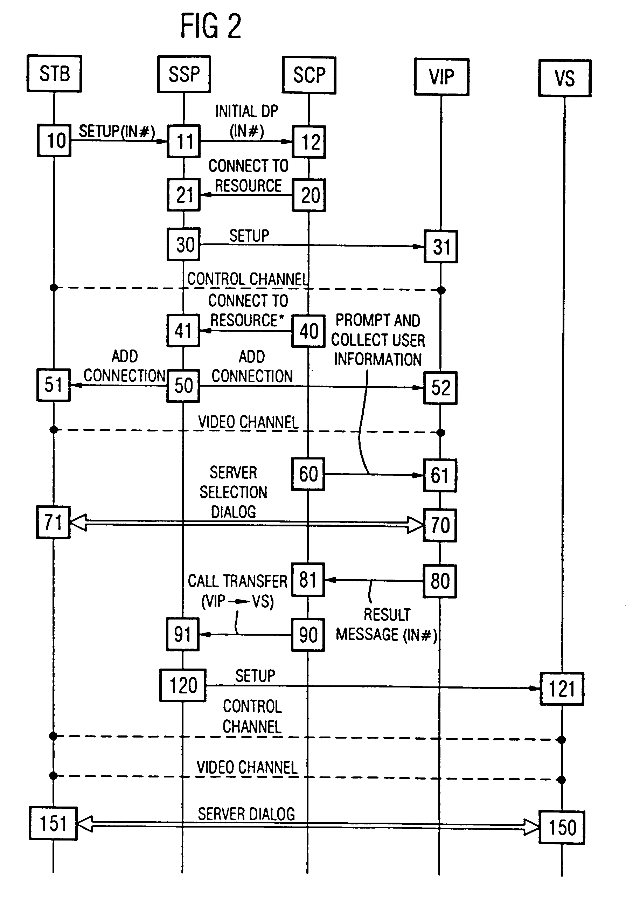

Die entsprechenden Verhältnisse sind in Figur 2 aufgezeigt. Zunächst wird gemäß dem Wunsch eines Teilnehmers von einer der Set-Top-Boxen STB eine Meldung Set-Up ( IN #) übergeben. Der Parameter IN # repräsentiert dabei eine für die intelligenten Netze verwendete Nummer, die einem bestimmten IN-Dienst zugeordnet ist. Der Netzknoten SSP übergibt daraufhin dem zentralen Rechner SCP diese Nummer. Dieser identifiziert unter Zuhilfenahme von internen Tabellen welcher Dienst vom Teilnehmer gewünscht wird. In vorliegendem Ausführungsbeispiel ist dies der Dienst der Bereitstellung eines Video-Films. Weiterhin existiert im Rechner SCP die Zuordnung dieses Dienstes zur physikalischen Adresse des zentralen Rechners VIP. Die physikalische Adresse wird im folgenden vom Rechner SCP dem Netzknoten SSP übergeben (Connect to Resource). Damit wird dem Netzknoten SSP signalisiert, daß eine Verbindung zwischen der betreffenden Set-Top-Box STB und dem Rechner VIP erstellt werden soll. Die entsprechenden Steuervorgänge werden nun im Netzknoten SSP durchgeführt und die Verbindung erstellt. Dabei handelt es sich zunächst um eine schmalbandige Verbindung, über die lediglich Schmalbandinformationen wie beispielsweise Steuersignale zur Menüauswahl vorgenommen werden können. Im folgenden wird nun vom zentralen Rechner SCP dem Netzknoten SSP eine weitere Meldung "Connect-to-Resource" übergeben, die letzterem signalisiert, daß eine weitere Verbindung aufgebaut werden soll. In diesem Fall handelt es sich um eine breitbandige Verbindung,über die beispielsweise Video-clips zur Unterstützung der Menüauswahl übertragen werden können. Es werden somit keine vollkommen neue Verbindung erstellt. Vielmehr erfolgt der Verbindungsaufbau im Sinne eines Multiple-Connection-Calls. Der Netzknoten SSP übergibt in Abhängigkeit von den erhaltenen Informationen der betreffenden Set-Top-Box STB sowie dem Rechner VIP die betreffenden Informationen und erstellt die breitbandige Verbindung. Im folgenden wird nun der Benutzerdialog gestartet. Der Teilnehmer wählt unter Steuerung des entsprechenden Menüs den Film aus, den er an seinem Endgerät TV zu sehen wünscht. Gegebenenfalls kann er sich Kurzauszüge eines ausgewählten Films (Video-Clips) zur näheren Auswahl einspielen lassen.

Der Auswahlvorgang wird vom Teilnehmer durch Auswahl des gewünschten Filmes abgeschlossen. Die entsprechenden Informationen werden über die schmalbandige Verbindung dem Rechner VIP übergeben. Aufgrund der internen Tabellen kann damit sofort ermittelt werden, welcher Video-Server VS die hierzu erforderlichen Informationen bereithält sowie welche physikalische Adresse im Netz demselben zugeordnet ist. Im folgenden wird vom Rechner VIP diese Information dem zentralen Rechner SCP übergeben,der den Netzknoten SSP mit dem Verbindungsaufbau beauftragt. Dabei muß die Verbindung zwischen dem Netzknoten SSP und dem Rechner VIP zunächst abgebaut werden und eine neue Verbindung von dem Netzknoten SSP zu dem betreffenden Video-Server VS aufgebaut werden. Die bestehende Verbindung zwischen der Set-Top-Box STB und dem Netzknoten SSP bleibt davon unberührt. Nach erfolgtem Verbindungsaufbau sind somit ebenso eine schmalbandige wie auch eine breitbandige Verbindung von der betreffenden Set-Top-Box zu dem gewünschten Video-Server aufgebaut. Ein Dialog zwischen dem Teilnehmer und dem Video-Server VS ist ebenfalls jederzeit möglich.

## Patentansprüche

1. Verfahren zur Verbindungssteuerung für interaktive Dienste in einem Intelligenten Netz (IN),mit einer Mehrzahl von peripheren Steuervorrichtungen (STB) sowie mit einem der Durchschaltung von Informationen dienenden Netzknoten (SSP), an den zumindest eine Speichervorrichtung (VS), eine Dienstevorrichtung (VIP) sowie eine zentrale Steuervorrichtung (SCP) angeschlossen sind,
**dadurch gekennzeichnet,**
daß unter der Steuerung des Intelligenten Netzes (IN) eine aus mehreren Verbindungsabschnitten gebildete Verbindung von einer der peripheren Steuervorrichtungen (STB) über den Netzknoten (SSP) zu der Dienstevorrichtung (VIP) erstellt wird, und im Anschluß daran nach Maßgabe eines Steuersignals gegebenenfalls der zwischen dem Netzknoten (SSP) und der Dienstevorrichtung (VIP) gelegene Verbindungsabschnitt abgebaut und von dem Netzknoten (SSP) zu der zumindest einen Speichervorrichtung (VS) aufgebaut wird, wobei die zwischen der jeweiligen peripheren Steuervorrichtung (STB) und dem Netzknoten (SSP) gelegenen Verbindungsabschnitte bestehen bleiben.

2. Verfahren nach Anspruch 1,
**dadurch gekennzeichnet,**
daß die von einer der peripheren Steuervorrichtungen (STB) zu der Dienstevorrichtung (VIP) erstellte Verbindung zunächst schmalbandig und später gegebenenfalls breitbandig ausgebildet ist.

3. Verfahren nach Anspruch 1 oder 2,
**dadurch gekennzeichnet,**
daß Abbau und Aufbau des betreffenden Verbindungsabschnittes für den schmalbandigen und breitbandigen Anteil in einem Schritt durchgeführt wird.

4. Verfahren nach einem der vorstehenden Ansprüche,
**dadurch gekennzeichnet,**
daß die Bandbreite der Verbindung an die benötigte Bitrate der Informationen angepaßt wird.

5. Verfahren nach einem der vorstehenden Ansprüche
**dadurch gekennzeichnet,**
daß die zentrale Steuervorrichtung (SCP) eine Tabelle enthält, in der die physikalischen Adressen aller im Netz vorhandenen Speichervorrichtungen (VS) abgelegt sind.

6. Verfahren nach Anspruch 1
**dadurch gekennzeichnet,**
daß das Steuersignal (SETUP) von der, den ersten Verbindungsaufbau initiierenden peripheren Steuervorrichtung (STB) abgegeben wird.

7. Verfahren nach Anspruch 1,
**dadurch gekennzeichnet,**
daß die jeweilige Speichervorrichtung ein Video-Server (VS) zum Abspeichern von Filmen ist.

## Claims

1. Method for connection control for interactive services in an intelligent network (IN), having a plurality of peripheral control apparatuses (STB) and having a network node (SSP) which is used for switching through information and to which at least one memory apparatus (VS), a service apparatus (VIP) as well as a central control apparatus (SCP) are connected
characterized
in that, under the control of the intelligent network (IN), a connection which is formed from a plurality of connecting sections is produced from one of the peripheral control apparatuses (STB) via the network node (SSP) to the service apparatus (VIP), and, in conjunction with this and in accordance with the control signal, the connecting section which is located between the network node (SSP) and the service apparatus (VIP) may be cleared and set up from the network node (SSP) to the at least one memory apparatus (VS), in which case the connecting sections located between the respective peripheral control apparatus (STB) and the network node (SSP) remain in existence.

2. Method according to Claim 1,
characterized
in that the connection which is produced from one of the peripheral control apparatuses (STB) to the service apparatus (VIP) is first of all designed to be narrowband and later, if required, to be broadband.

3. Method according to Claim 1 or 2,
characterized
in that the clearing and setting up of the relevant connecting section for the narrowband and broadband elements is carried out in one step.

4. Method according to one of the preceding claims,
characterized
in that the bandwidth of the connection is marked to the required bit rate of the information.

5. Method according to one of the preceding claims
characterized
in that the central control apparatus (SCP) contains a table in which the physical addresses of all the memory apparatuses (VS) which are present in the network are stored.

6. Method according to Claim 1,
characterized
in that the control signal (SETUP) is output by the peripheral control apparatus (STB) which initiates the first connection setting up process.

7. Method according to Claim 1,
characterized
in that the respective memory apparatus is a video server (VS) for storing films.

## Revendications

1. Méthode pour commander une liaison utilisée pour des services interactifs dans un réseau intelligent (IN), avec une pluralité de dispositifs de commande périphériques (STB) ainsi qu'avec un noeud de réseau (SSP) servant à la commutation de données, auquel sont connectés au moins un dispositif de mémoire (VS), un dispositif de services (VIP) ainsi qu'un dispositif de commande central (SCP), caractérisée en ce que sous la commande du réseau intelligent (IN), une liaison formée de plusieurs tronçons de liaison est établie de l'un des dispositifs de commande périphériques (STB), via le noeud de réseau (SSP), au dispositif de services (VIP) et en ce que par la suite, selon un signal de commande, le tronçon de liaison situé entre le noeud de réseau (SSP) et le dispositif de services (VIP) est éventuellement supprimé et établi du noeud de réseau (SSP) au - au moins - un dispositif de mémoire (VS), les tronçons de liaison situés entre chaque dispositif de commande périphérique (STB) et le noeud de réseau (SSP) étant conservés.

2. Méthode selon la revendication 1, caractérisée en ce que la liaison établie par l'un des dispositifs de commande périphériques (STB) avec le dispositif de services (VIP) est d'abord une liaison à bande étroite et plus tard éventuellement à bande large.

3. Méthode selon la revendication 1 ou 2, caractérisée en ce que la suppression et l'établissement du tronçon de liaison respectif pour la portion à bande étroite et à bande large s'effectue en une étape.

4. Méthode selon l'une des revendications précédentes, caractérisée en ce que la largeur de bande de la liaison est adaptée au débit binaire nécessaire des données.

5. Méthode selon l'une des revendications précédentes, caractérisée en ce que le dispositif de commande central (SCP) contient une table, dans laquelle sont rangées les adresses physiques de tous les dispositifs de mémoire (VS) présents dans le réseau.

6. Méthode selon la revendication 1, caractérisée en ce que le signal de commande (SETUP) est émis par le dispositif de commande périphérique (STB) initiant le premier établissement de liaison.

7. Méthode selon la revendication 1, caractérisée en ce que le dispositif de mémoire respectif est un serveur vidéo (VS) pour le stockage en mémoire de films.
